(19) Europäisches Patentamt
European Patent Office
Office européen des brevets

(11) Veröffentlichungsnummer: **0 060 402**
**A1**

(12) **EUROPÄISCHE PATENTANMELDUNG**

(21) Anmeldenummer: **82101215.0**

(22) Anmeldetag: **18.02.82**

(51) Int. Cl.³: **F 04 D 15/02**, F 04 D 13/02, F 04 D 29/04, G 21 C 15/24

(30) Priorität: **07.03.81 DE 3108764**

(43) Veröffentlichungstag der Anmeldung: **22.09.82 Patentblatt 82/38**

(84) Benannte Vertragsstaaten: **AT CH DE FR GB IT LI**

(71) Anmelder: **BROWN BOVERI REAKTOR GmbH, Dudenstrasse 44, D-6800 Mannheim 1 (DE)**

(72) Erfinder: **Russ, Jakob, Dipl.-Ing., Germersheimer Strasse 96, D-6725 Römerberg 1 (DE)**
Erfinder: **Rösner, Edmund, Ing. grad., Gross-Breitenbach 28, D-6942 Mörlenbach (DE)**

(74) Vertreter: **Dahlmann, Gerhard, Dipl.-Ing. et al, BROWN BOVERI REACTOR GmbH Dudenstrasse 44, D-6800 Mannheim 1 (DE)**

(54) **Sicherheitseinrichtung zur Vermeidung von Überdrehzahlen des Antriebsmotors einer Primärkühlmittelpumpe einer wassergekühlten Kernreaktoranlage.**

(57) Bei einer derartigen Einrichtung soll die Zuverlässigkeit beim Ansprechen erhöht werden. Dazu ist eine Strömungskupplung 8, ein in Abhängigkeit von der Motorwellendrehzahl öffnendes Ventil 17 und ein Behälter 15 für die Betriebsflüssigkeit 21 der Strömungskupplung 8 vorgesehen. Bei einer Lösung wird als Kupplung zwischen Motor 9 und Pumpenwelle 1 die Strömungskupplung 8 verwendet. Tritt eine Überdrehzahl auf, wird eine Kupplungshälfte 7 entleert, so daß der Kraftschluß unterbrochen ist. Eine andere Lösung sieht die Verwendung einer Strömungskupplung als Bremse vor. Hierzu ist am freien Ende 19 der Motorwelle 9 eine Kupplungshälfte 7 angebracht, welche die Drehung der Motorwelle mitausführt. Eine zweite Kupplungshälfte 14 ist am stationären Lager 11 des Motorgehäuses befestigt. Im Falle einer Überdrehzahl öffnet das Ventil 17, so daß vom Behälter 15 Betriebsflüssigkeit in die Strömungskupplung gelangt und ein bremsender Kraftschluß zwischen den Kupplungshälften eintritt.

EP 0 060 402 A1

0050402

BROWN BOVERI REAKTOR GmbH
Dudenstraße 44
6800 Mannheim 1

Mannheim, den 5.2.1982
SG 151.70 - 109/81

# Sicherheitseinrichtung zur Vermeidung von Überdrehzahlen des Antriebsmotors einer Primärkühlmittelpumpe einer wassergekühlten Kernreaktoranlage

Die Erfindung betrifft eine Sicherheitseinrichtung zur Vermeidung von Überdrehzahlen des Antriebsmotors einer Primärkühlmittelpumpe einer wassergekühlten Kernreaktoranlage wobei zwischen Motor- und Pumpenwelle eine Kupplung angeordnet ist und die Motorwelle ein Schwungrad trägt.

Bei wassergekühlten Kernreaktoranlagen wird der Primärkühlmittelkreislauf durch Pumpen gewährleistet, die von Elektromotoren angetrieben werden. Mit dem Antriebsmotor ist ein großes Schwungrad verbunden, das bei einem Netzausfall die Auslaufzeit der Pumpe verlängert.

Für den hypothetischen Störfall eines Bruchs einer Primärkühlmittelleitung wird unterstellt, daß ein Pumpenlaufrad als Turbine wirkt und den Antriebsmotor zusammen mit dem Schwungrad in eine unzulässige Überdrehzahl bringt. Hierbei besteht die Gefahr, daß das Schwungrad bersten und dessen Bruchstücke Beschädigungen am Reaktorgebäude oder darin angeordneten Komponenten hervorrufen kann. Selbst wenn gemäß der DE-AS 23 38 265 das Schwungrad abgeworfen wird, besteht weiterhin die Gefahr, daß mit der Motorwelle

0060402



verbundene Teile in den Bereich der unzulässigen Drehzahl gelangen.

Zur Vermeidung einer derartigen Überdrehzahl ist es aus der DE-AS 25 08 812 bekannt eine Kupplung zwischen Elektromotor und Pumpe anzuordnen, deren Verbindungselemente bei Auftreten einer Überdrehzahl durch Zünden einer Treibladung zerstört werden. Hierbei dürfte es schwierig sein, die Treibladung so zu dimensionieren, daß nur die Schrauben zerstört werden - eine Beschädigung anderer Bauteile jedoch nicht erfolgt.

Weiterhin ist aus der DE-AS 24 20 361 eine hydraulisch oder pneumatisch betätigte Bremseinrichtung bekannt, die unmittelbar auf das Schwungrad einwirkt. Eine am Außenumfang des einen Durchmesser von ca. 1,8m aufweisenden Schwungrades angreifende Bremseinrichtung erfordert jedoch eine große Bremskraft und eine aufwendige Abfuhr der Reibungswärme.

Die Erfindung stellt sich daher die Aufgabe eine zuverlässig arbeitende und einfach aufgebaute Sicherheitseinrichtung zur Vermeidung einer Überdrehzahl anzugeben, die eine Beschädigung von Verbindungselementen ausschließt.

Gelöst wird die Aufgabe erfindungsgemäß dadurch, daß die Kupplung eine Strömungskupplung ist und daß wenigstens eine Kupplungshälfte bei unzulässigem Drehzahlanstieg zur Entleerung ansteuerbar ist.

Durch das Entleeren fehlt der Strömungskupplung die Betriebsflüssigkeit, so daß die Motorwelle von der Pumpenwelle getrennt ist und zum Stillstand kommt. Die Kupplung bleibt unbeschädigt und ist nach Wiederbeaufschlagung mit Betriebsflüssigkeit wieder funktionsfähig. Die Verwendung der Strömungskupplung vermeidet aufgrund ihres günstigen Dämpfungsverhaltens gegenüber Radial- und Axialschwingungen die nachteilige gegenseitige Beeinflussung von Pumpe und Motor.

Zur Entleerung der Kupplung ist zwischen einer Kupplungshälfte und einem Behälter eine Verbindungsleitung angeordnet, die ein mit einer Drehzahlmeßeinrichtung verbundenes Ventil aufweist.

Gemäß einer besonderen Ausgestaltung der Sicherheitseinrichtung ist je eine Kupplungshälfte in die zugehörige Lagerstelle der Pumpen- bzw. der Antriebswelle integriert. Diese Ausbildung erlaubt eine platzsparende Bauweise der Kupplungsverbindung.

Die der Anmeldung zugrundeliegende Aufgabe wird weiterhin erfindungsgemäß dadurch gelöst, daß eine Kupplungshälfte einer Strömungskupplung mit dem freien Ende der Motorwelle verbunden ist und mit dieser umläuft, daß eine zweite Kupplungshälfte an einem Träger stationär angeordnet ist und daß über diese Kupplungshälfte bei unzulässigem Drehzahlanstieg die Strömungskupplung mit Betriebsflüssigkeit beaufschlagbar ist.

Auch diese Lösung verwendet eine Strömungskupplung. Hierbei läuft die Kupplung jedoch bei störungsfreiem Betrieb ohne Betriebsflüssigkeit, so daß kein Kraftschluß entsteht. Erst bei Auftreten einer Überdrehzahl erfolgt die Beaufschlagung mit Betriebsflüssigkeit, so daß eine Bremswirkung zwischen der stationären und der mitdrehenden Kupplungshälfte eintritt.

Zur Beaufschlagung der Kupplung mit Betriebsflüssigkeit ist zwischen der stationär angebrachten Kupplungshälfte und einem Behälter eine Verbindungsleitung angeordnet, die ein mit einer Drehzahlmeßeinrichtung verbundenes Ventil aufweist.

Vorzugsweise ist der Träger für die stationär angebrachte Kupplungshälfte ein Teil des Motorgehäuses.

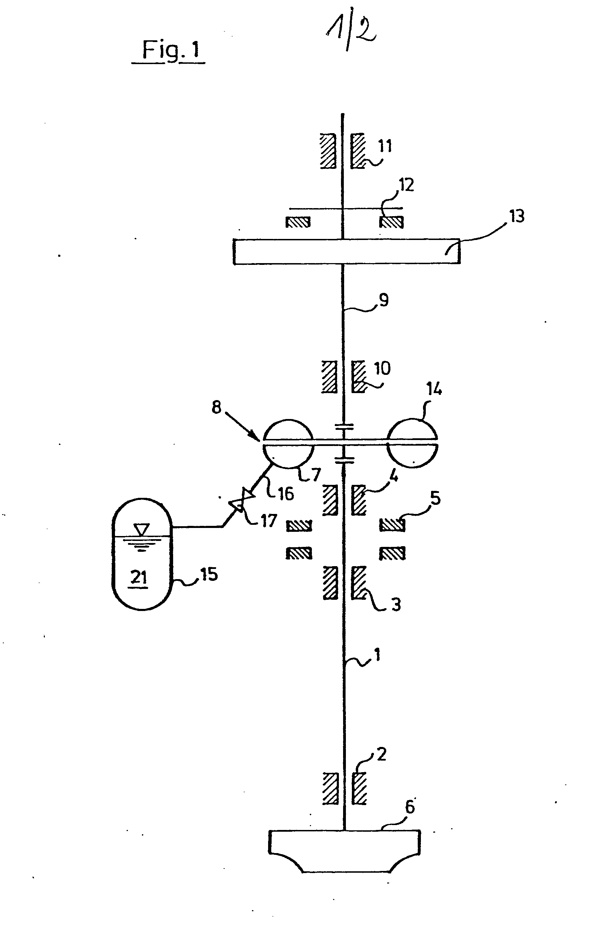

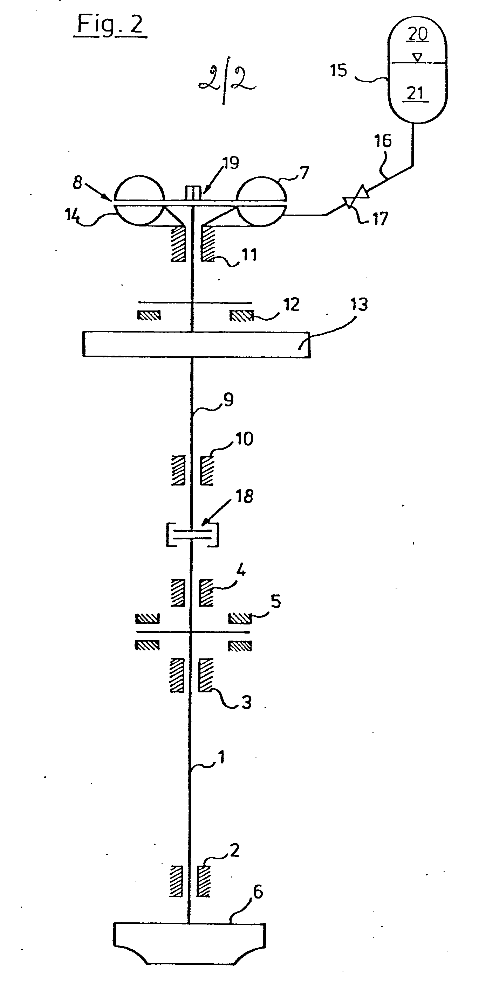

Anhand der schematischen Zeichnungen Fig. 1 und 2 wird die Sicherheitseinrichtung beschrieben.

Die Fig. 1 zeigt in vereinfachter Darstellung eine Primärkühlmittelpumpe einer Druckwasserreaktoranlage mit ihrem Antrieb. Eine Pumpenwelle 1, die über Radial-2,3,4 und

Axiallager 5 abgestütztist, trägt ein Pumpenlaufrad 6. Das dem Pumpenlaufrad abgewandte Ende der Pumpenwelle ist mit der Kupplungshälfte 7 einer Strömungskupplung 8 bestückt. Auch die Motorwelle 9 ist über Radial-10,11 und Axiallager 12 abgestützt. Sie trägt außerdem ein Schwungrad 13 zur Verlängerung der Auslaufzeit der Pumpe bei Stromausfall. Das dem Radiallager 10 zugewandte Ende der Motorwelle ist mit einer Kupplungshälfte 14 bestückt, die zusammen die Strömungskupplung 8 zur Kraftübertragung von der Motor- zur Pumpenwelle bilden. Die Kupplungshälften 7, 14 sind in das Lager 4 bzw. 10 integriert, so daß eine platzsparende Bauweise ermöglicht wird. Zwischen der Kupplungshälfte 7 und einem Behälter 15 ist eine Verbindungsleitung 16 vorgesehen, in die ein Ventil 17 eingebaut ist. Das Ventil öffnet, sobald die Motorwelle eine unzulässige Drehzahl erreicht. Dazu ist eine nichtdargestellte Drehzahlmeßeinrichtung mit der Motorwelle verbunden und löst über ein Steuergerät das Öffnen des Ventils aus. Nach dem Öffnen des Ventils läuft die Betriebsflüssigkeit der Strömungskupplung in den Behälter 15. Der Kraftschluß der Kupplung ist dadurch unterbrochen und ein Überdrehen des Antriebsmotors ausgeschlossen. Die Strömungskupplung ist durch Beaufschlagen mit Flüssigkeit wieder betriebsbereit.

Auch die in der Fig. 2 beschriebene Sicherheitseinrichtung verwendet eine Strömungskupplung 8, ein in Abhängigkeit von der Motorwellendrehzahlöffnendes Ventil 17 und einen Behälter 15 für die Betriebsflüssigkeit der Strömungskupplung. Wie die Fig. 2 erkennen läßt, sind Motor-9 und Pumpenwelle 1 über eine Kupplung 18 verbunden, die selbstverständlich auch eine Strömungskupplung sein kann. Bei dieser Ausbildung befindet sich die Sicherheitseinrichtung zur Vermeidung von Überdrehzahlen im Bereich des freien Endes 19 der Motorwelle. Dazu ist eine Kupplungshälfte 7 einer Strömungskupplung unmittelbar mit dem freien Ende der Motorwelle 9 verbunden, so daß es deren Drehbewegung mitausführt. Eine zweite Kupplungshälfte 14 ist an dem Radiallager 11 des nichtdargestellten Motorgehäuses angebracht, so daß sie keine Drehbewegung

0060402



ausführt. Sie bildet jedoch zusammen mit der am Motorwellenende angeordneten Kupplungshälfte 7 eine Strömungskupplung 8. Von dem Behälter 15 führt eine mit einem drehzahlabhängig ansteuerbaren Ventil 17 ausgerüstete Verbindungsleitung 16 zur stationär angeordneten Kupplungshälfte 14. Der Behälter 15 enthält unter einem Druckgaspolster 20 die Betriebsflüssigkeit für die Strömungskupplung 8. Wird die zulässige Drehzahl der Motorwelle überschritten, so bewirkt eine mit derselben verbundene Drehzahlmeßeinrichtung ein Öffnen des Ventils 17. Daraufhin strömt die Betriebsflüssigkeit in die Strömungskupplung und führt zu einem Kraftschluß zwischen den Kupplungshälften 7, 14. Die während des Normalbetriebs leerlaufende Strömungskupplung 8 wird also nach dem Auftreten einer unzulässigen Drehzahlerhöhung zur Bremse und vermeidet daher eine kritische Überdrehzahl der Motorwelle und damit des Schwungrades 13 mit Sicherheit.

Die Verwendung einer Strömungskupplung als Sicherheitseinrichtung gegen Überdrehzahlen der Motorwelle bringt eine einfache und zuverlässige Lösung des Problems.

Bezugszeichenliste

| | |
|---|---|
| 1 | Pumpenwelle |
| 2,3,4,10,11 | Radiallager |
| 5,12 | Axiallager |
| 6 | Pumpenlaufrad |
| 7,14 | Kupplungshälfte |
| 8 | Strömungskupplung |
| 9 | Motorwelle |
| 13 | Schwungrad |
| 15 | Behälter |
| 16 | Verbindungsleitung |
| 17 | Ventil |
| 18 | Kupplung |
| 19 | freies Ende |
| 20 | Druckgaspolster |
| 21 | Betriebsflüssigkeit |

Patentansprüche

1. Sicherheitseinrichtung zur Vermeidung von Überdrehzahlen des Antriebsmotors einer Primärkühlmittelpumpe einer wassergekühlten Kernreaktoranlage wobei zwischen Motor- und Pumpenwelle eine Kupplung angeordnet ist und die Motorwelle ein Schwungrad trägt, dadurch gekennzeichnet, daß die Kupplung eine Strömungskupplung (8) ist und daß wenigstens eine Kupplungshälfte (7, 14) bei unzulässigem Drehzahlanstieg zur Entleerung ansteuerbar ist.

2. Sicherheitseinrichtung nach Anspruch 1, dadurch gekennzeichnet, daß zwischen der Kupplungshälfte (7) und einem Behälter (15) eine Verbindungsleitung (16) angeordnet ist, die ein mit einer Drehzahlmeßeinrichtung verbundenes Ventil (17) aufweist.

3. Sicherheitseinrichtung nach Anspruch 1 oder 2, dadurch gekennzeichnet, daß je eine Kupplungshälfte (7, 14) in das zugehörige Lager (4, 10) integriert ist.

4. Sicherheitseinrichtung zur Vermeidung von Überdrehzahlen des Antriebsmotors einer Primärkühlmittelpumpe einer wassergekühlten Kernreaktoranlage wobei zwischen Motor- und Pumpenwelle eine Kupplung angeordnet ist und die Motorwelle ein Schwungrad trägt, dadurch gekennzeichnet, daß eine Kupplungshälfte (7) einer Strömungskupplung (8) mit dem freien Ende (19) der Motorwelle (9) verbunden ist und mit dieser umläuft, daß eine zweite Kupplungshälfte (14) an einem Träger (11) stationär angeordnet ist und daß über diese Kupplungshälfte bei unzulässigem Drehzahlanstieg die Strömungskupplung mit Betriebsflüssigkeit beaufschlagbar ist.

5. Sicherheitseinrichtung nach Anspruch 4, dadurch gekennzeichnet, daß zwischen der stationär angeordneten Kupplungshälfte (14) und einem Behälter (15) eine Verbindungsleitung (16) vorgesehen ist, die ein mit einer Drehzahlmeßeinrichtung verbundenes Ventil (17) aufweist.

6. Sicherheitseinrichtung nach Anspruch 4 oder 5, dadurch gekennzeichnet, daß der Träger (11) ein Teil des Motorgehäuses ist.

5.2.1982

SG 151:70 - 109/81



Fig. 1

11
12
13
9
10
14
8
7
4
16
17
5
21
15
3
1
2
6

Fig. 2

2/2

20
21
15
16
19
7
8
14
17
11
12
13
9
10
18
4
5
3
1
2
6

0060402

Europäisches Patentamt

# EUROPÄISCHER RECHERCHENBERICHT

Nummer der Anmeldung

EP 82 10 1215

| EINSCHLÄGIGE DOKUMENTE | | | |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
| A | FR-A-2 197 481 (HANY & CIE.) * Seite 3, Zeilen 9-16, 30-31; Figur 1 * --- | 1-3 | F 04 D 15/02<br>F 04 D 13/02<br>F 04 D 29/04<br>G 21 C 15/24 |
| A | US-A-3 407 912 (M.G. MOORE) * Spalte 3, Zeilen 1-10 * --- | 1,2 | |
| A | PUMPS POMPES PUMPEN, Nr. 142, August 1978, Seiten 321-325, G.B. D. HOTBLACK: "Pump control by variable filling fluid couplings" --- | 1 | |
| A | DE-C- 557 067 (J.M. VOITH) * Seite 2, Zeilen 23-32 * --- | 1 | |
| X | FR-A-2 327 446 (G.A.A.A.) * Seite 3, Zeilen 14-16, 35-40; Seite 4, Zeilen 23-26; Figur 1 * --- | 4-6 | RECHERCHIERTE SACHGEBIETE (Int. Cl. ³) |
| A | DE-C- 817 078 (EUGEN SPEHR) * Seite 1, Zeilen 24-28 * --- | 4 | F 04 D<br>G 21 C<br>G 21 D<br>F 04 B<br>F 16 D |
| A | FR-A-2 342 417 (WESTINGHOUSE) --- | | |
| D,A | DE-A-2 508 812 (KRAFTWERK UNION) --- | | |
| | ./. | | |

Der vorliegende Recherchenbericht wurde für alle Patentansprüche erstellt.

| Recherchenort | Abschlußdatum der Recherche | Prüfer |
|---|---|---|
| DEN HAAG | 02-08-1982 | WOOD R.S. |

KATEGORIE DER GENANNTEN DOKUMENTEN

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03 82

0060402

Europäisches Patentamt

# EUROPÄISCHER RECHERCHENBERICHT

Nummer der Anmeldung

EP 82 10 1215

Seite 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| D,A | DE-A-2 338 265 (KRAFTWERK UNION) --- | | |
| D,A | DE-A-2 420 361 (KRAFTWERK UNION) ----- | | |
| | | | RECHERCHIERTE SACHGEBIETE (Int. Cl. 3) |

Der vorliegende Recherchenbericht wurde für alle Patentansprüche erstellt.

| Recherchenort | Abschlußdatum der Recherche | Prüfer |
|---|---|---|
| DEN HAAG | 02-06-1982 | WOOD R.S. |

KATEGORIE DER GENANNTEN DOKUMENTEN

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82